Europäisches Patentamt

European Patent Office

Office européen des brevets

(19)

(11) Publication number : **0 496 448 B1**

(12) **EUROPEAN PATENT SPECIFICATION**

(45) Date of publication of patent specification :
30.03.94 Bulletin 94/13

(51) Int. Cl.⁵ : **B01J 23/74, C11C 3/12**

(21) Application number : **92200098.9**

(22) Date of filing : **15.01.92**

(54) **Preparation of hydrogenation catalysts.**

(30) Priority : **23.01.91 EP 91300497**

(43) Date of publication of application :
**29.07.92 Bulletin 92/31**

(45) Publication of the grant of the patent :
**30.03.94 Bulletin 94/13**

(84) Designated Contracting States :
**AT BE CH DE DK ES FR GB GR IT LI NL PT SE**

(56) References cited :
**EP-A- 0 114 704**
**EP-A- 0 145 094**
**GB-A- 2 066 690**
**US-A- 3 959 181**

(73) Proprietor : **UNICHEMA CHEMIE BV**
**Buurtje 1**
**NL-2802 BE Gouda (NL)**

(72) Inventor : **Lok, Cornelis Martinus**
**Domela Nieuwenhuisstraat 14**
**NL-6941 BL Didam (NL)**
Inventor : **Ritter, Heike**
**Soesterstrasse 5**
**W-4190 Kleve (DE)**

(74) Representative : **Hartong, Richard Leroy**
**Unilever N.V. Patent Division P.O. Box 137**
**NL-3130 AC Vlaardingen (NL)**

EP 0 496 448 B1

## Description

The application relates to the preparation of hydrogenation catalysts containing a catalyst metal selected from transition metals having an atomic number between 26 and 30 and alumina carrier material.

Catalysts containing nickel as the catalyst metal and alumina as a carrier are known and are mainly applied for the preparation of methane-containing gas. It is usual to prepare such catalysts by co-precipitating nickel- and aluminium ions from a solution with an alkaline reagent like, e.g., ammonium bicarbonate, as is disclosed in US-A-3 320 182 (Esso Research).

According to this co-precipitation method, catalysts are obtained which have reasonably good properties, but the filterability of the catalyst precursor (green cake) and catalytic properties, particularly in the hydrogenation of unsaturated triglyceride oils, are inadequate. The BET total surface area of these catalysts is typically below 200 m²/g of catalyst and the average pore size is in the order of a few nanometers.

European patent EP 168 091-B (Unilever) discloses nickel/alumina catalysts which have an atomic ratio of nickel/aluminium between 10 and 2, an active nickel surface area between 70 and 150 m²/g nickel and an average pore size, depending on the above atomic ratio, between 4 and 20 nanometers. These catalysts can be prepared by a process in which an insoluble nickel compound is precipitated from an aqueous solution of a nickel salt with an excess alkaline precipitating agent, which precipitate is subsequently allowed to age in suspended form and is then collected, dried and reduced, wherein, after the nickel ions have been precipitated, a soluble aluminium compound is added.

It is known in the art to co-precipitate nickel ions with an alkaline precipitating agent and silicate. Such a process is disclosed in German "Auslegeschrift" DE-B 2 150 975 (Esso). According to this process, nickel ions and silicate ions are co-precipitated from a solution on to a porous silicon dioxide carrier with an alkaline precipitation agent, such as, for example, ammonium carbonate. The catalyst so obtained, however, has certain disadvantages as to certain properties; in particular filtration often causes difficulties.

European patent EP 145 094-B (Unilever) discloses the preparation of catalysts where the catalyst metal is selected from transition metals having an atomic number between 26 and 30 and the carrier material is silica. The process involves precipitation with an alkaline precipitating agent, followed by the addition of soluble silicate.

As such it is known from US-A-3,959,181 (H. Boerma) to prepare a hydrogenation catalyst by precipitating nickel on a solid carrier comprising silica, e.g. kieselguhr, using an aqueous solution comprising an alkali metal carbonate and an alkali metal hydroxide. However, the weight ratio $Ni/SiO_2$, in case the support material is a silica, is relatively small, being preferably between 0.5 and 4.

The specified alkaline precipitating agents for use in these processes include alkali metal hydroxides, alkali metal carbonates, alkali metal bicarbonates, the corresponding ammonium compounds and unspecified mixtures of the above-mentioned compounds.

We have now discovered that, when specific mixtures of an alkali metal hydroxide and an alkali metal carbonate are used as the alkaline precipitating agent in the preparation of transition metal catalysts on an alumina carrier, catalysts are formed having advantageous properties in terms of filterability and oil-hardening time.

Thus, according to the invention there is provided a process for the preparation of a hydrogenation catalyst comprising a catalyst metal selected from transition metals having an atomic number between 26 and 30 and alumina carrier material, the process comprising the steps of precipitating an insoluble compound of the catalyst metal from a solution of a salt of the catalyst metal with an excess alkaline precipitating agent, thereafter adding a soluble source of the alumina carrier material, allowing the precipitate to age in suspended form and collecting, drying and reducing the precipitate, characterised in that the alkaline precipitating agent is selected from mixtures of alkali metal hydroxides and alkali metal carbonates in a molar ratio of 1:3 to 3:1.

The catalyst metal is selected from transition metals having an atomic number between 26 and 30, such as nickel or cobalt. Salts of the catalyst metal which are suitable are water-soluble salts, such as nitrates, sulphates, acetates, chlorides or formates. The precipitation step will take place in what is referred herein as a precipitation reactor. The solutions which are charged to the precipitation reactor preferably contain between 10 and 80 g catalyst metal per litre, especially between 25 and 60 g catalyst metal per litre.

The alkaline precipitating agent is a mixture of an alkali metal hydroxide and an alkali metal carbonate, especially a mixture of sodium hydroxide and sodium carbonate. The molar ratio is from 3:1 to 1:3, especially from 2:1 to 1:2. The concentration of the alkaline solution which is fed into the precipitation reactor, is preferably between 20 and 300 g alkaline material (calculated as anhydrous material) per litre (in so far as solubility allows for this), more particularly between 50 and 250 g per litre.

The molar excess of the alkaline precipitating agent is preferably from 50% to 159%. The two solutions (the catalyst metal salt solution and the alkaline precipitating agent) are added in such amounts per unit time that the excess of alkaline precipitating agent is present during the-precipitation step, so that the normality of

2

the liquid is between 50 and 300, preferably between 150 and 250 (this normality is determined by titrating 1 l clear filtrate, obtained by filtering the slurry, with a solution of 1 mol/l of an aqueous solution of hydrochloric acid, with bromophenol blue as indicator and is expressed in ml of HCl solution necessary to neutralize 1 l of clear filtrate). Sometimes it is necessary to add some more alkaline solution during the ageing step, in order to keep the normality within the range indicated above.

The carrier material is alumina. The soluble source of the carrier material may be added in the form of a solution or in solid form (e.g. as crystals).

Suitable soluble sources of alumina include aluminium nitrate, sodium aluminate or alumina, the latter dissolving at least partly in the excess alkali. The amount of aluminium compound added is preferably 0.1 to 0.5, most preferably 0.15 to 0.25 mol aluminium ions per gram atom of catalyst metal in the suspension.

The precipitation reactor has such dimensions with respect to the amounts of liquid pumped in, that short average residence times can be obtained. As a rule, average residence times of between 0.1 sec. and 30 minutes, preferably between 0.2 sec. and 10 minutes, especially less than 4.5 minutes or even less than 2 minutes are used in the precipitation reactor.

In a preferred embodiment, in which the precipitation step (step 1) is carried out continuously, the amounts of solutions fed into the precipitation reactor are controlled by measuring, optionally continuously, the normality or pH of the reactor affluent.

The temperature at which the precipitation takes place (2-60°C) can be controlled by adjusting the temperatures of the liquids fed in. For certain applications the temperature of the precipitation may also be higher, e.g. up to 100°C. The required vigorous agitation of the liquid in the precipitation reactor preferably takes place with a mechanical energy input of between 5 and 2000 watts/l of solution such as about 20 watts/l.

The reaction mixture obtained from the precipitation reactor goes immediately thereafter to a stirred post-reactor of a significantly higher capacity in which the suspension is agitated and aged. Preferably, the liquid in the ageing reactor, thus during the ageing step, is kept at a temperature between 30 and 105°C, preferably between 60 and 100°C. The addition of a soluble source of carrier material should take place as quickly as possible after precipitation of the metal, preferably within 30 minutes, more particularly within 15 minutes. Agitation in the post-reactor is preferably at a power input lower than in the precipitation reactor, such as about 2 watts/l.

At this stage, the soluble source of carrier material is added. Optional further ingredients which can also be added at this stage include water-insoluble carrier materials and promotors. Optionally, the promotor may be co-precipitated with the nickel compound from a soluble source of promotor metal.

Suitable promotors include other catalyst metals and metals whose presence positively influences the performance of the catalyst. Suitable amounts of promotors are from 0.5 to 10% by weight. When the catalyst metal is nickel, suitable promotors include molybdenum, cobalt, copper, iron, lanthanum, magnesium, silver and mixtures thereof.

The precipitation step and also the maturing step can be carried out batchwise (= discontinuously), continuously and semi-continuously (e.g. according to the cascade method).

Usually the normality of the liquid in the ageing reactor during the ageing step (step 2) is kept in the same range as during the precipitation step (step 1), if necessary by adding some more alkali. The ageing step can be carried out in one or more reactors, the (total) average residence time being maintained between 5 and 180 minutes, preferably between 10 and 150, especially 30 - 90 minutes. If two or more reactors are used, it is preferred to have the temperature in the second or further reactor 5 to 15 centigrades lower than in the preceding ageing reactor.

After the ageing step has been completed, the solid material is separated from the mother liquor, usually washed, dried, optionally ground and calcined and thereafter activated by reducing with hydrogen at a temperature between 250 and 600°C, preferably between 300 and 500°C, such as between 350 and 450°C. This activation can take place at atmospheric pressure or at increased pressure.

The solid material is preferably washed with water; sometimes alkaline material or a surface-active material is added to the washing water. Also an organic solvent, e.g. acetone, can be advantageously used during washing. Drying preferably takes place with hot air. Spray-drying is preferred but freeze-drying is also quite possible.

The catalyst thus obtained is especially suitable for the hydrogenation of unsaturated organic compounds, particularly oils, fats, fatty acids and fatty acid derivatives like nitriles. This hydrogenation is carried out with hydrogen at an increased temperature (80-250°C) and optionally an increased pressure ($0.1-5.0 \times 10^6$ Pa).

Using the process of the invention, we have found that the particle size of the catalyst can markedly be decreased, compared to the use of soda alone as the alkaline precipitating agent. By replacing all the soda with sodium hydroxide, small particles are obtained, but such small particles are difficult to filter. To our surprise, the effect of soda replacement on particle size is not linear, a minimum particle size occurring at a hydroxide/carbonate molar ratio of about 3:1, depending on the precipitation temperature. It is further surprising that, while particle sizes are greater than the minimum when the hydroxide/ carbonate ratio is between 3:1 and 1:3, the oil hydrogenation time is improved, relative to the use of soda alone.

Without wishing to be bound by theory, in the case of nickel being the catalyst metal, it is supposed that the hydroxide ions act to stabilise the initially formed small particles of basic nickel carbonate which form in the precipitation reactor and prevent these particles from growing in the second step, thereby maintaining efficiency. Bulk densities of the catalysts were at a minimum value with an $OH/CO_3$ molar ratio of between about 1:1 and about 3:1. This is thought to be indicative of small particles and a high pore volume.

The invention will now be illustrated by the following examples.

EXAMPLES 1 AND 1A

A solution of nickel salt (35 g/l, 0.6 mol/l Ni) and a mixture of soda (57 g/l, 0.54 mol/l) and lye (sodium hydroxide 22.8 g/l, 0.57 mol/l) were continuously pumped at equal flow rates into a vigorously stirred precipitation reactor, where nickel hydroxide/carbonate was precipitated at a temperature of 40°C. In this precipitation reactor, the suspension had an average residence time of 20 s. The suspension was then transferred continuously to a larger ageing reactor, in which the average residence time was 37 min. and the temperature was 65°C. Simultaneously, an amount of aluminate ions was continuously dosed into this reactor, as an aqueous solution of sodium aluminate (10 g/l Al). The Al/Ni mol ratio was 0.20. The normality of the clear filtrate, after filtering the slurry as explained above, amounted to 170. The suspension was subsequently transferred continuously to a holding tank in which the temperature was 60°C. Thereafter, the suspension was filtered and washed at 70°C. The resulting washed cake was spray-dried and activated with hydrogen for 60 min. at a temperature of 430°C, using 14 $Nm^3$ hydrogen per kg Ni.

The activity and the selectivity of the catalyst in soya bean oil (iodine value 133) was determined as follows: 250 g soya bean oil was hydrogenated at a pressure of $1 \times 10^5$ Pa hydrogen (atmospheric pressure) with 0.01% nickel with intensive stirring while raising temperature from 150 to 220 min. in 1 h.

The time to reach iodine value 90 was used as a measure of activity while the slip melting point and the solid content at 30°C determined by NMR at this iodine value were considered to be selectivity parameters.

Results:

|  | Example 1 (lye) | Example 1A (no lye*) |
|---|---|---|
| Hydrogenation time (min.): | 50 | 80 |
| Melting point (°C) | 28.8 | 30.0 |
| Solids at 30°C (%) | 1.8 | 2.9 |

*lye from Example 1 replaced by soda in 1 to 1 molar ratio.

Conclusion: Replacing soda by lye on a 1:1 molar basis results in a significant activity (shorter hydrogenation time) and an improved selectivity (lower melting point, lower solids).

EXAMPLES 2 TO 4

Using the process described in connection with Example 1, catalysts were prepared using different $OH/CO_3$ ratios and at different precipitation temperatures. The results were as set out in the following Table.

| Example No. | Precipitation temperature (°C) | Ratio OH/CO$_3$ | Particle size (d50µm) | Bulk density of precipitate (g/l) | Hydrogenation time (min.) |
|---|---|---|---|---|---|
| 2A* | 65 | 0 | 13.6 | | >80 |
| 2 | 65 | 1:1 | 9.4 | 215 | 53 |
| 3 | 65 | 3:1 | 5.9 | 194 | 52 |
| 2B* | 65 | NaOH only | 6.8 | 258 | 73.5 |
| 2C* | 97 | 0 | 12.6 | 159 | 59 |
| 4 | 97 | 1:1 | 8.0 | 131 | 50 |
| 2D* | 97 | NaOH only | 6.4 | 307 | 72.5 |

*Comparative example

## Claims

1. A process for the preparation of a hydrogenation catalyst comprising a catalyst metal selected from transition metals having an atomic number between 26 and 30 and a carrier material, the process comprising the steps of precipitating an insoluble compound of the catalyst metal from a solution of a salt of the catalyst metal with an excess alkaline precipitating agent, thereafter adding a soluble source of the alumina carrier material, allowing the precipitate to age in suspended form and collecting, drying and reducing the precipitate, wherein the alkaline precipitating agent is selected from mixtures of alkali metal hydroxides and alkali metal carbonates in a molar ratio of 1:3 to 3:1.

2. A process according to Claim 1, wherein the catalyst metal is selected from nickel and cobalt.

3. A process according to Claim 1, wherein the molar excess of the alkaline precipitating agent is from 50 to 159%.

4. A process according to Claim 1, wherein the alkali precipitating agent is a mixture of sodium hydroxide and sodium carbonate.

**Patentansprüche**

1. Verfahren zur Herstellung eines Hydrogenierungskatalysators, umfassend ein Katalysatormetall, ausgewählt aus Übergangsmetallen mit einer Atomzahl zwischen 26 und 30, und ein Trägermaterial, wobei das Verfahren die Schritte Fällung einer unlöslichen Verbindung des Katalysatormetalls aus der Lösung eines Salzes des Katalysatormetalls mit einem im Überschuß vorliegenden alkalischen Fällungsmittel, danach Zufügung einer löslichen Quelle des Aluminiumoxidträgermaterials, Zulassung der Alterung des Niederschlages in suspendierter Form, Sammlung, Trocknung und Reduktion des Niederschlages umfaßt, wobei das alkalische Fällungsmittel aus Gemischen von Alkalimetallhydroxiden und Alkalimetallcarbonaten in einem Molverhältnis von 1:3 bis 3:1 ausgewählt ist.

2. Verfahren nach Anspruch 1, dadurch gekennzeichnet, daß das Katalysatormetall ausgewählt ist aus Nickel und Kobalt.

3. Verfahren nach Anspruch 1, dadurch gekennzeichnet, daß der molare Überschuß des alkalischen Fällungsmittels von 50 bis 159% reicht.

4. Verfahren nach Anspruch 1, dadurch gekennzeichnet, daß das alkalische Fällungsmittel ein Gemisch aus Natriumhydroxid und Natriumcarbonat ist.

**Revendications**

1. Procédé de préparation d'un catalyseur d' hydrogénation comprenant un métal catalyseur choisi parmi les métaux de transition ayant un numéro atomique compris entre 26 et 30 et un matériau support, le procédé comprend les étapes de précipiter un composé insoluble du métal catalyseur à partir d'une solution d'un sel de métal catalyseur avec un agent précipitant alcalin en excès, puis on ajoute ensuite une source soluble d'alumine comme matériau support, de laisser mûrir le précipité sous forme de suspension, et de recueillir, sécher et réduire le précipité, dans lequel l'agent précipitant alcalin est sélectionné à partir de mélanges d'hydroxydes de métaux alcalins et de carbonates de métaux alcalins dans une proportion molaire de 1:3 à 3:1.

2. Procédé selon la revendication 1, dans lequel le métal catalyseur est choisi parmi le nickel et le cobalt.

3. Procédé selon la revendication 1, dans lequel l'excès molaire d'agent précipitant alcalin est compris entre 50 et 159%.

4. Procédé selon la revendication 1, dans lequel l'agent précipitant alcalin est un mélange d'hydroxyde de sodium et de carbonate de sodium.